# EUROPEAN PATENT APPLICATION

(11) **EP 4 699 910 A1**
(43) Date of publication of application: **25.02.2026**
(21) Application number: 24792050.7
(22) Date of filing: 17.04.2024
(51) Int. Cl.: B62D 27/02, B62D 25/08, B62D 21/15

(54) **VEHICLE**

(30) Priority: 18.04.2023 CN 202310461375; 16.06.2023 CN 202310723969
(71) Applicant: BYD Company Limited, Shenzhen, Guangdong 518118 (CN)
(72) Inventor: YANG, Feng, Shenzhen, Guangdong 518118 (CN); YI, Bengang, Shenzhen, Guangdong 518118 (CN); ZHAO, Yanli, Shenzhen, Guangdong 518118 (CN); LIU, Tengyong, Shenzhen, Guangdong 518118 (CN); LIANG, Darong, Shenzhen, Guangdong 518118 (CN)
(74) Representative: Mathys & Squire
(86) International application number: PCT/CN2024/088393
(87) International publication number: WO 2024/217465

(57) **Abstract**

A vehicle is provided. The vehicle includes a longitudinal beam (141), an A-pillar (251), a lateral beam, and an integrated member (203), where the integrated member is installed on the longitudinal beam, and the integrated member is separately connected to the lateral beam and the A-pillar. When the longitudinal beam of the vehicle experiences a collision, a collision force can be dispersedly transferred to the lateral beam and the A-pillar through the integrated member that is highly integrated, so that a collision force transfer stability effect and protection performance for occupants are improved.

## Description

### CROSS-REFERENCE TO RELATED APPLICATIONS

This application claims priority to Chinese Patent Application No. "202310461375.7" filed by BYD Company Limited on April 18, 2023 and entitled "VEHICLE" and Chinese Patent Application No. "202310723969.0" filed by BYD Company Limited on June 16, 2023 and entitled "VEHICLE", both of which are incorporated herein by reference in their entireties.

### TECHNICAL FIELD

This application relates to the field of vehicle technologies, and in particular, to a vehicle.

### BACKGROUND

In a vehicle of the related art, a longitudinal beam is connected to an inner and outer rear connecting plate of the longitudinal beam through a first connection structure, the longitudinal beam is connected to a lateral beam through a second connection structure, the longitudinal beam is connected to a dust cover through a third connection structure, and the longitudinal beam is further connected to a part such as a dashboard through another separate connection structure.

When the vehicle of the related art experiences a collision, for example, when a front longitudinal beam is subject to a front collision, a collision force transfer effect of the longitudinal beam is poor, collision force transfer stability is poor, and protection for occupants in the vehicle is poor.

### SUMMARY

This application aims to resolve at least one of technical problems existing in the conventional technologies to a specific degree.

Therefore, this application provides a vehicle.

A vehicle according to an embodiment of this application includes: a longitudinal beam and an A-pillar; a lateral beam; and an integrated member, wherein the integrated member is installed on the longitudinal beam, and the integrated member is separately connected to the lateral beam and the A-pillar.

In the vehicle according to this application, the longitudinal beam, the lateral beam, and the A-pillar are connected through the integrated member, and the integrated member has an advantage of being highly integrated. When the longitudinal beam experiences a collision, the collision force can be dispersedly transferred to the lateral beam and the A-pillar through the highly integrated member, so that collision force transfer stability effects and occupant protection performance are improved.

Additional aspects and advantages of this application are in part described in the following descriptions and in part become apparent in the following descriptions or are learned through practice of this application.

### BRIEF DESCRIPTION OF DRAWINGS

FIG. 1 is a diagram of a part of a structure of a vehicle from an angle according to an embodiment of this application;
FIG. 2 is a diagram of a part of a structure of a vehicle from another angle according to an embodiment of this application;
FIG. 3 is a diagram of a part of a structure of a vehicle from still another angle according to an embodiment of this application;
FIG. 4 is a sectional view of a part of a vehicle from an angle according to an embodiment of this application;
FIG. 5 is a sectional view of a part of a vehicle from another angle according to an embodiment of this application;
FIG. 6 is a diagram of assembling of a first lateral beam, an integrated member, and a second lateral beam of a vehicle according to an embodiment of this application;
FIG. 7 is a diagram of assembling of a first lateral beam and an integrated member of a vehicle according to an embodiment of this application;
FIG. 8 is a diagram of assembling of a second lateral beam and an integrated member of a vehicle according to an embodiment of this application;
FIG. 9 is a diagram of assembling of a first lateral beam, an integrated member, and a second lateral beam of a vehicle according to an embodiment of this application;
FIG. 10 is a diagram of assembling of a first lateral beam and an integrated member of a vehicle according to an embodiment of this application;
FIG. 11 is a diagram of assembling of a dashboard, an integrated member, and an A-pillar of a vehicle according to an embodiment of this application;
FIG. 12 is a diagram of assembling of an integrated member and an A-pillar of a vehicle according to an embodiment of this application;
FIG. 13 is a diagram of a part of a structure of a vehicle according to an embodiment of this application;
FIG. 14 is a diagram of a part of a structure of a vehicle according to an embodiment of this application;
FIG. 15 is a diagram of a part of a structure of a vehicle according to an embodiment of this application;
FIG. 16 is a sectional view along a line A-A in FIG. 15 in an X-axis direction;
FIG. 17 is an enlarged view of a circled area C shown in FIG. 16;
FIG. 18 is a sectional view along a line B-B in FIG. 15 in an X-axis direction; and
FIG. 19 is an enlarged view of a circled area D shown in FIG. 18.

### DESCRIPTION OF EMBODIMENTS

The following describes embodiments of this application in detail. Examples of embodiments are shown in the accompanying drawings. Same or similar reference numerals always represent same or similar elements or elements having same or similar functions. Embodiments described below with reference to the accompanying drawings are examples, and are merely used to describe this application, but cannot be understood as a limitation on this application.

The following describes a vehicle in embodiments of this application with reference to the accompanying drawings.

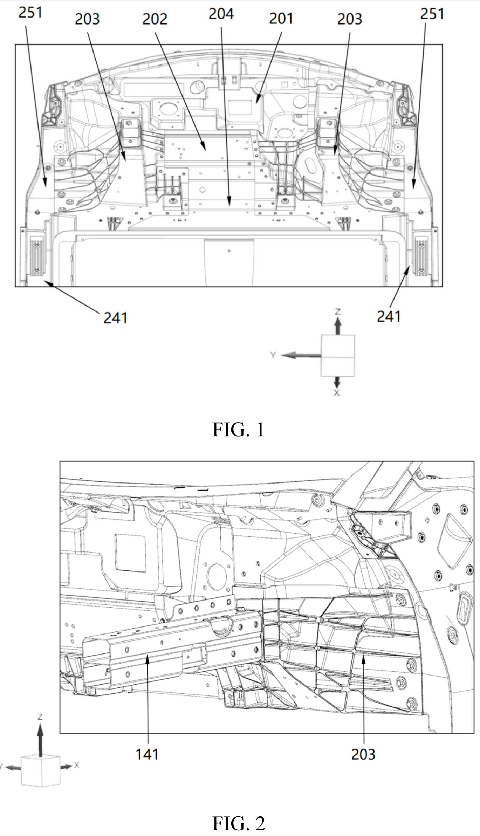

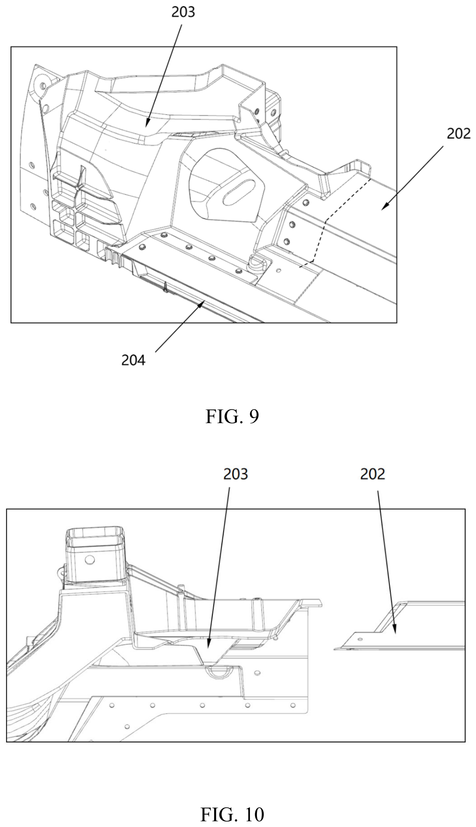

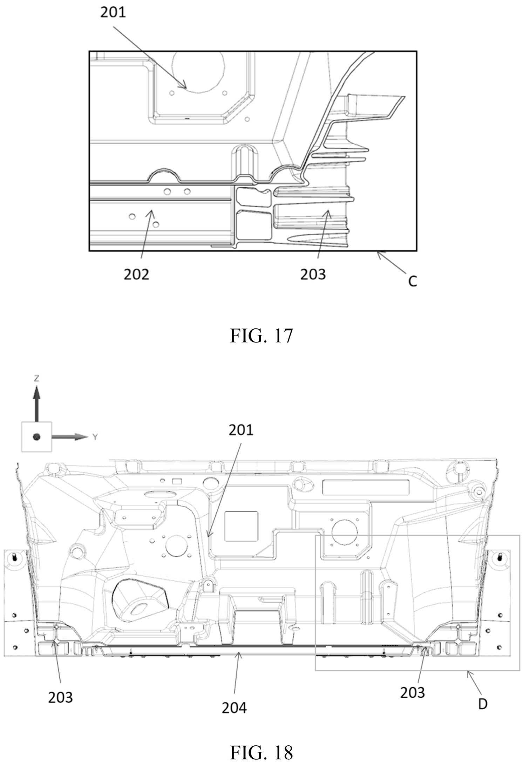

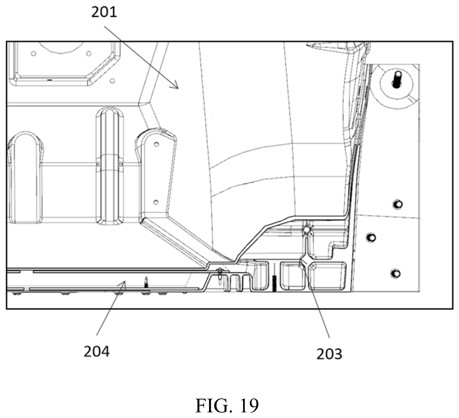

As shown in FIG. 1 to FIG. 19, the vehicle according to an embodiment of this application includes a longitudinal beam 141, a lateral beam, an A-pillar 251, and an integrated member 203.

The integrated member 203 is installed on the longitudinal beam 141, and the integrated member 203 is separately connected to the lateral beam and the A-pillar 251.

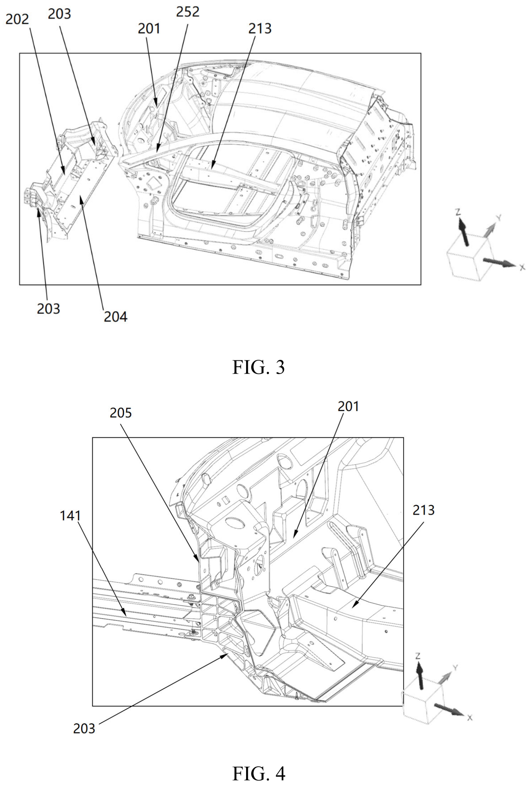

As shown in FIG. 3, the vehicle according to the embodiment of this application includes the longitudinal beam 141, the lateral beam, the A-pillar 251, and the integrated member 203. The integrated member 203 is installed on the longitudinal beam 141, and the lateral beam and the A-pillar 251 exist near the longitudinal beam 141. The longitudinal beam 141, the lateral beam, and the A-pillar 251 can be connected through the integrated member 203. For example, a first part of the integrated member 203 is connected to the longitudinal beam 141, a second part of the integrated member 203 is connected to the lateral beam, and a third part of the integrated member 203 is connected to the A-pillar. In this case, a part of a structure of the integrated member 203 may be used as a force transfer structure between the longitudinal beam 141 and the lateral beam, and another part of the structure of the integrated member 203 may be used as a force transfer structure between the longitudinal beam 141 and the A-pillar 251. In other words, the longitudinal beam 141 and the lateral beam may be connected through the integrated member 203, and a collision force to which the longitudinal beam is subjected may be transferred to the lateral beam through the integrated member 203. In this way, a highly integrated feature of the integrated member 203 can be used to improve the collision force transfer effect. Similarly, the longitudinal beam 141 and the A-pillar 251 may also be connected through the integrated member 203, to improve the collision force transfer effect. Details are not described herein again.

It should be noted that, in the related art, a first component is connected to the longitudinal beam 141 through a separately disposed force transfer structure, and a second component is connected to the longitudinal beam 141 through a separately disposed force transfer structure. In this case, technical problems of poor collision force transfer effect, poor collision force transfer stability, and poor protection for occupants in the vehicle exist. However, in this embodiment of this application, a plurality of force transfer structures are integrated into one structure. In other words, the plurality of force transfer structures form the integrated member 203, and the integrated member 203 integrates a plurality of force transfer structural components. The longitudinal beam 141 may be connected to a peripheral part through the integrated member 203 in this embodiment of this application. When the longitudinal beam 141 experiences a collision, the collision force may be transferred to the integrated member 203 through the longitudinal beam 141, and then the collision force is dispersedly transferred to the lateral beam and the A-pillar through the integrated member 203.

It will be understood that the integrated member 203 in this embodiment of this application integrates at least the force transfer structure through which the longitudinal beam 141 transfers a force to the lateral beam, and the force transfer structure through which the longitudinal beam 141 transfers a force to the A-pillar 251, so that the integrated member 203 is highly integrated. In this way, the integrated member 203 has higher structural strength and rigidity. In other words, in this embodiment of this application, the integrated member 203 is used, to implement high integration of the plurality of force transfer structures and improve stability of collision force transfer.

Therefore, in the vehicle according to this embodiment of this application, the longitudinal beam 141, the lateral beam, and the A-pillar 251 are connected through the integrated member 203, and the integrated member 203 has an advantage of being highly integrated. When the longitudinal beam 141 experiences a collision, the collision force can be dispersedly transferred to the lateral beam and the A-pillar through the highly integrated member 203, so that a collision force transfer stability effect and occupant protection performance are improved.

According to an embodiment of this application, the integrated member 203 is an integrally formed member. Use of the integrated formed member can improve an integration degree of the integrated member 203, and facilitate processing and manufacturing of the integrated member 203.

In some implementations of this application, the integrated member 203 is a casting. In other words, the integrated member 203 is a casting integrated structural member. For example, the integrated member 203 is an aluminum casting. Due to a forming process of the aluminum casting, a surface of the aluminum casting may have a reinforced structure, so that structural strength of the integrated member 203 is improved.

According to an embodiment of this application, the vehicle further includes a dashboard 201, and the dashboard 201 is connected to the integrated member 203. In other words, the longitudinal beam 141 can be connected to the dashboard 201 through the integrated member 203, to facilitate force transfer from the longitudinal beam 141 toward the dashboard 201 when the longitudinal beam 141 experiences a front collision. In this case, the longitudinal beam 141 may be a front longitudinal beam, and may transfer force toward the dashboard 201 when the front longitudinal beam experiences a collision. In this embodiment, the dashboard 201 and the longitudinal beam 141 are connected through the integrated member 203, so that high integration of the integrated member 203 is utilized to greatly improve a collision force transfer effect between the dashboard 201 and the longitudinal beam 141.

The dashboard 201 is a carbon fiber member, so that the dashboard 201 has advantages such as a light weight.

A rear part of the integrated member 203 is connected to the dashboard 201 through a double-"Z"-like-shaped nesting structure, to improve stability of a connection structure and collision force transfer.

The longitudinal beam 141 extends in a first direction. In the first direction, a front part of the integrated member 203 is connected to the longitudinal beam 141, and a rear part of the integrated member 203 is connected to the dashboard 201. In other words, the integrated member 203 may be located between the dashboard 201 and the front longitudinal beam. The integrated member 203 may be connected to the front longitudinal beam in a front direction, and the integrated member may be connected to the dashboard 201 in a rear direction. In this embodiment of this application, the front direction is a front direction of the vehicle, and the rear direction is a rear direction of the vehicle. In this embodiment, the dashboard 201 is located on a side of the front longitudinal beam in the first direction, to help transfer a collision force from the first direction, improve a force transfer effect of a front collision force of the dashboard 201 and the front longitudinal beam, and improve protection performance for occupants in the vehicle.

The longitudinal beam 141 extends in the first direction, and the lateral beam extends in a second direction. For example, the longitudinal beam 141 extends in a front-rear direction of the vehicle, and the lateral beam extends in a left-right direction of the vehicle. After the front longitudinal beam transfers a front collision force in the first direction, at least a part of the collision force is transferred in the second direction through the integrated member 203 and the lateral beam, so that the collision force is transferred in a plurality of directions.

The integrated member 203 and the A-pillar 251 may be connected in the second direction. For example, the front part of the integrated member 203 is connected to the front longitudinal beam, and the rear part of the integrated member is connected to the A-pillar 251, so that a collision force can be transferred to a position at which the A-pillar 251 is located. The front longitudinal beam may form a second-direction force transfer frame with the A-pillar 251.

The integrated member 203 is installed at an end part of the longitudinal beam 141 in the first direction. In other words, a structure at the root of the longitudinal beam 141 may be received by one integrated member 203. In other words, in this embodiment, an armored structural method at the root of the longitudinal beam 141 is used, and when the longitudinal beam 141 experiences a front collision, the longitudinal beam 141 transfers the collision force backward to the root of the longitudinal beam 141 and then to the integrated member 203.

A part of the integrated member 203 is used as a reinforcing member, the reinforcing member may be located at an upper part of the integrated member in a third direction, and the reinforcing member may be connected to the A-pillar. In other words, the part of the integrated member 203 may be used as an internal reinforcing plate, and can perform reinforcement and force transfer. In this application, the third direction may be a height direction of the vehicle. For example, the first direction is a Y direction, the second direction is an X direction, the third direction is a Z direction, and any two directions of the X direction, the Y direction, and the Z direction are perpendicular to each other.

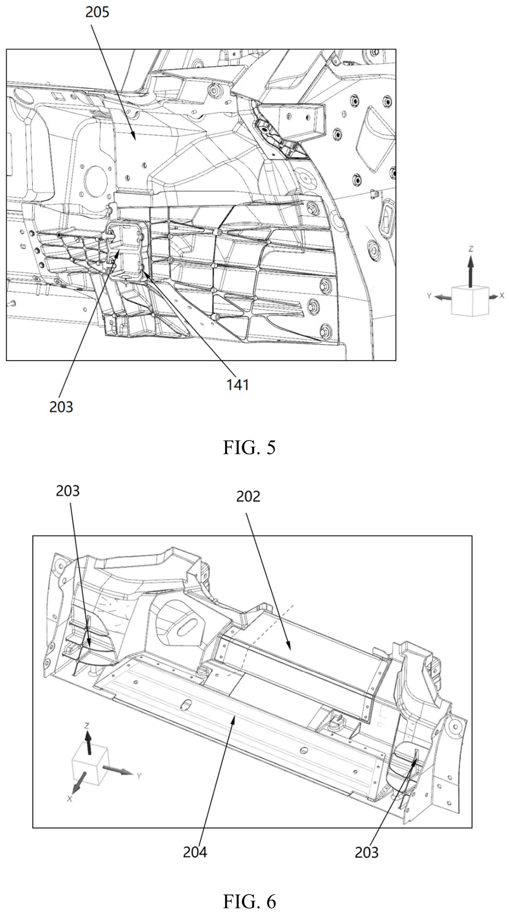

For example, a part of the integrated member 203 is used as the dash reinforcing pillar 205, an upper part of the integrated member 203 may be used as the dash reinforcing pillar 205, and collision forces may be resisted and dispersed through the dash reinforcing pillar 205. As shown in FIG. 5, the collision force is resisted and dispersed through the dash reinforcing pillar 205, and may be transferred backward to the A-pillar 251 and an A-pillar top frame 252.

In this embodiment, a front collision force may be transferred backward to the integrated member 203 through a front section of the front longitudinal beam, based on structural strength and rigidity of the integrated member 203, the integrated member 203 and the lateral beam may be combined to form a first-direction force transfer frame to dispersedly transfer a part of the collision force to the lateral beam.

In some implementations of this application, the vehicle further includes a door sill 241, and the door sill 241 is connected to the integrated member 203. In other words, a part of the integrated member 203 may be connected to the door sill 241, and the part may be used as a force transfer structure for transferring a force to the door sill 241. The integrated member 203 is connected to the door sill 241 in the second direction. For example, the front part of the integrated member 203 is connected to the front longitudinal beam, and the rear part of the integrated member is connected to the door sill 241, so that a collision force can be transferred to a position at which the door sill 241 is located. The front longitudinal beam may form a second-direction force transfer frame with the door sill 241.

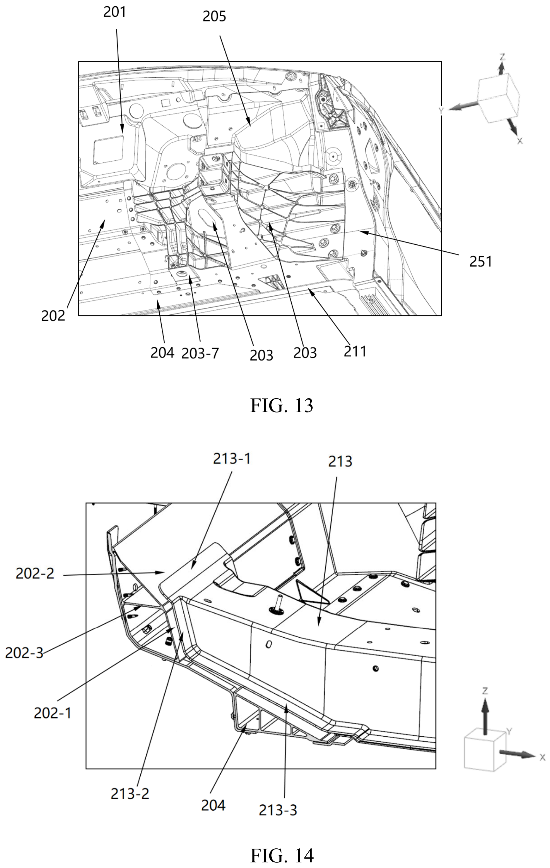

According to an embodiment of this application, as shown in FIG. 13, the vehicle further includes a floor, and a height of the floor is not higher than a height of the longitudinal beam 141. For example, a height, in the third direction, of the end part of the front longitudinal beam in the first direction is not less than a height of a floor area in the third direction. For example, the root of the front longitudinal beam is flush with the floor area in the third direction. In other words, the end part of the front longitudinal beam in the first direction and the floor area adopt a flush structure design, so that intrusion of a conventional structure into space under the floor is avoided, and the space under the floor is released.

The vehicle further includes a floor sealing plate 211. A bottom plane of the integrated member 203 and the floor sealing plate 211 are designed to remain flush in the third direction, and a bottom of the integrated member 203 may separately cooperate with a bottom surface of the second lateral beam 204, the floor sealing plate 211, and the A-pillar 251.

The vehicle further includes a front subframe. A rear installation point of the front subframe is arranged flatly on the integrated member 203. In other words, the installation surface 203-7 of the front subframe is arranged on the integrated member 203. An installation structure of the rear installation point of the front subframe may be embedded in the integrated member 203, and a reinforcing rib is designed around the installation structure, to improve rigidity and strength of the installation point of the subframe. For example, in the third direction, the installation point of the front subframe is arranged at a lower part of the integrated member 203 and is maintained at a same height as the floor area.

The second lateral beam 204 is disposed at a rear part of the rear installation structure of the front subframe in a double-"Z"-like-shaped embedded design, to help ensure structural stability at a position of the installation point of the subframe during collision.

In some implementations of this application, the integrated member 203 and the longitudinal beam 141 are connected in a nested manner. A nesting connection structure is used, so that connection convenience between the integrated member 203 and the longitudinal beam 141 is improved, and degrees of freedom in a plurality of directions are limited.

According to an embodiment of this application, a section of the longitudinal beam 141 has a plurality of cavities. For example, as shown in FIG. 4, the section of the longitudinal beam 141 is of a " 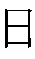 "-like-shaped structure. In other words, the longitudinal beam 141 may be of the " 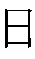 "-like-shaped profile structure. The section herein is a section along a plane perpendicular to the extending direction of the longitudinal beam 141.

For example, a section of the front part of the integrated member 203 is of the " 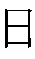 "-like-shaped structure, an opening groove is provided at the rear end of the longitudinal beam 141, and the opening groove extends in the front-rear direction. When the integrated member 203 is installed on the longitudinal beam 141, the front part of the integrated member 203 may be inserted into the opening groove. " 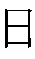 "-shaped nesting connection is used in structural design of a connection area between the integrated member 203 and the front longitudinal beam, so that fastening of the integrated member 203 and the front longitudinal beam is improved in a plurality of dimensions in three-dimensional space. This embodiment in this application is different from the related art in which connection on a single plane is used in that, nesting between cavity structures is used, so that a fastening structure is more reliable, and connection reliability between the lateral beam and the root of the longitudinal beam 141 can be greatly improved, to help ensure stability of collision force transfer at the root of the longitudinal beam 141 and protection for occupants.

For example, the integrated member 203 and the longitudinal beam 141 may be positioned through a threaded fastener. For example, after the front part of the integrated member 203 is inserted into the rear end of the longitudinal beam 141, the front part of the integrated member 203 may be embedded into an inner side of the longitudinal beam 141 through the threaded fastener installed on wall surfaces of the integrated member 203 and the longitudinal beam 141, to receive the longitudinal beam 141, and is fastened through bolt connection on an outer side wall, to ensure a smooth and effective front-rear receiving structure of the longitudinal beam 141 and the integrated member 203.

In some implementations of this application, the integrated member 203 is connected to the lateral beam in a nested manner, to improve convenience of connecting the integrated member 203 to the lateral beam, and limit degrees of freedom in a plurality of directions.

According to an embodiment of this application, the integrated member 203 has a first cooperating surface and a second cooperating surface that are separately formed in a Z shape, and the lateral beam has a third cooperating surface and a fourth cooperating surface that are separately formed in a Z shape, where the first cooperating surface and the third cooperating surface are in contact with each other, and the second cooperating surface is in contact with the fourth cooperating surface.

For example, the integrated member 203 has the first cooperating surface and the second cooperating surface that are separately formed in a Z shape, and the first cooperating surface and the second cooperating surface are staggered in the first direction and are at least partially staggered in the third direction. The lateral beam has the third cooperating surface and the fourth cooperating surface that are separately formed in a Z shape. The first cooperating surface is in contact with the third cooperating surface, and the second cooperating surface is in contact with the fourth cooperating surface. In this way, the integrated member 203 and the lateral beam are connected in a double Z-shaped nested manner, to improve connection reliability between the lateral beam and the root of the longitudinal beam 141.

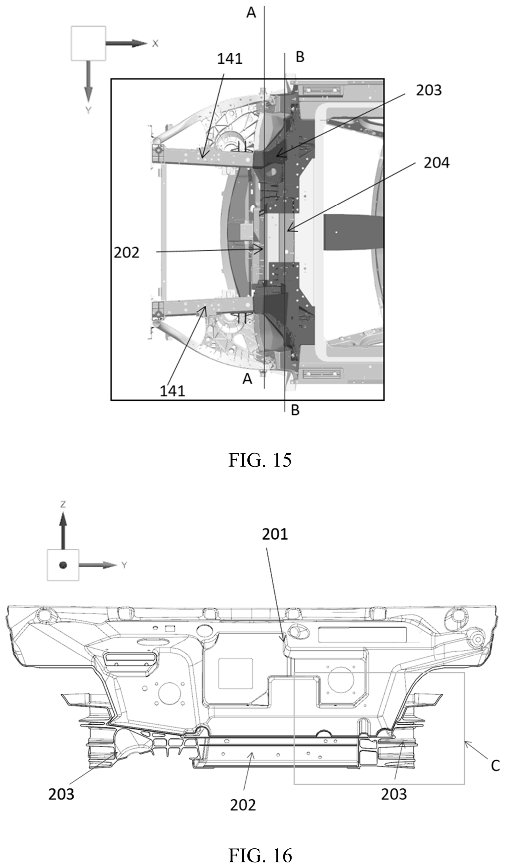

In some implementations of this application, as shown in FIG. 15 to FIG. 19, at least one of the first cooperating surface and the second cooperating surface of the integrated member 203 protrudes toward the lateral beam, and at least one of the third cooperating surface and the fourth cooperating surface of the lateral beam protrudes toward the integrated member 203, to facilitate stable and reliable connection between the integrated member 203 and the lateral beam.

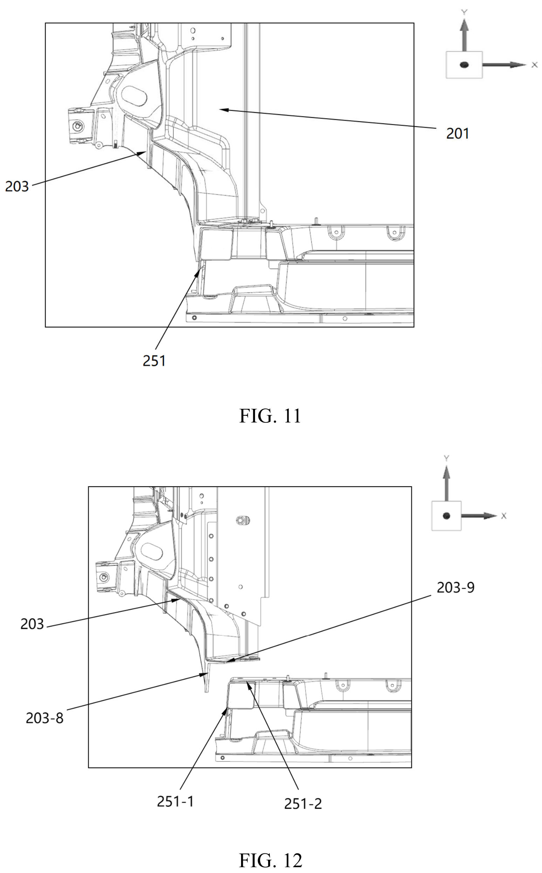

According to an embodiment of this application, as shown in FIG. 11, the integrated member 203 has a first flanged surface 203-8 and a second flanged surface 203-9. The first flanged surface 203-8 and the second flanged surface 203-9 cooperate to form an opening with an included angle, and a part of the A-pillar 251 protrudes into the opening. The A-pillar 251 has an A-pillar first profile 251-1 and an A-pillar second profile 251-2. When the part of the A-pillar 251 is embedded into the integrated member 203, the A-pillar first profile 251-1 is opposed to the first flanged surface 203-8, and the A-pillar second profile 251-2 is opposite to the second flanged surface 203-9. For example, a right-angle structure embedded design is used for a connection area between the integrated member 203 and the A-pillar 251.

As shown in FIG. 11, the integrated member 203 is connected to the A-pillar 251 and the dashboard 201 separately in the rear direction, and the A-pillar 251 may mainly undertake force transfer in the rear direction of the vehicle. For example, the integrated member 203 is disposed between the dashboard 201 and the front longitudinal beam, the integrated member 203 is connected to the front longitudinal beam in the front direction, and is connected to the dashboard 201 and the A-pillar 251 in the rear direction, the integrated member 203 is connected to the lateral beam in a left-right direction, and the lateral beam may be connected to a lower end of the dashboard 201, so that collision force transfer effects of the lower end of the dashboard 201 and the root of the front longitudinal beam and protection performance can be greatly improved.

As shown in FIG. 12, the integrated member 203 has the first flanged surface 203-8 and the second flanged surface 203-9, and the A-pillar 251 has the A-pillar first profile 251-1 and the A-pillar second profile 251-2. An included angle between the first flanged surface 203-8 and the second flanged surface 203-9 is about 90°. In other words, there is a quasi-right-angle relationship between the first flanged surface 203-8 and the second flanged surface 203-9. Positions of the first flanged surfaces 203-8 and the second flanged surfaces 203-9 on the integrated member 203 are set at a position at which the integrated member is in lap joint with the A-pillar 251. The first flanged surface 203-8 and the second flanged surface 203-9 may cooperate with the A-pillar first profile 251-1 and the A-pillar second profile 251-2 respectively, and a physical connection structure may be disposed on a cooperating plane, so that the integrated member 203 and the A-pillar 251 can be closely embedded together, to facilitate restriction of movement of the integrated member 203 in the first direction and movement of the integrated member in the second direction, and effectively improve an effect and stability of transferring a front collision force to the A-pillar.

In this embodiment, the right-angle structure embedded design is used for the connection area between the integrated member 203 and the A-pillar 251, so that the integrated member 203 and the A-pillar can be tightly held together. In this way, force transfer in the first direction and the second direction can be effectively implemented, and a force transfer effect from the root of the longitudinal beam 141 to the A-pillar 251 is improved, to effectively ensure stability of collision force transfer at the root of the longitudinal beam 141 and protection for occupants.

According to an embodiment of this application, the lateral beam includes a first lateral beam 202 and a second lateral beam 204, and the first lateral beam 202 and the second lateral beam 204 are spaced apart. The integrated members 203 are separately connected to the first lateral beam 202, the second lateral beam 204, and the A-pillar 251.

For example, the first lateral beam 202 and the second lateral beam 204 are spaced apart in the third direction. The first lateral beam 202 and the second lateral beam 204 may separately extend in the second direction, and the first lateral beam 202 and the second lateral beam 204 may be separately connected to the longitudinal beam 141 through the integrated member 203. For example, the first lateral beam 202 and the second lateral beam 204 extend in the left-right direction separately, and the longitudinal beam 141 extends in the front-rear direction. The first lateral beam 202 and the second lateral beam 204 are spaced apart in a vertical direction, so that a collision force received can be transferred to more positions.

When a front collision force is transferred backward to the integrated member 203 through the front section of the front longitudinal beam, based on structural strength and rigidity of the integrated member 203, the integrated member 203 and the first lateral beam 202 and the second lateral beam 204 combine, to form the first-direction force transfer frame, so that a part of the collision force can be dispersedly transferred to the first lateral beam 202 and second lateral beam 204.

The integrated member 203 is connected to the first lateral beam 202 and the second lateral beam 204 in the left-right direction. The first lateral beam 202 is disposed above the integrated member 203, and a height may be equal to the upper part of the integrated member 203. The second lateral beam 204 is disposed below the integrated member 203, and a height may be equal to the lower part of the integrated member 203. In this case, the integrated member 203 may form the first-direction force transfer frame with the first lateral beam 202 and the second lateral beam 204.

The first lateral beam 202, the second lateral beam 204, the longitudinal beam 141, and the integrated member 203 may cooperate to form a Y-like-shaped structure, to facilitate force transfer in a plurality of directions.

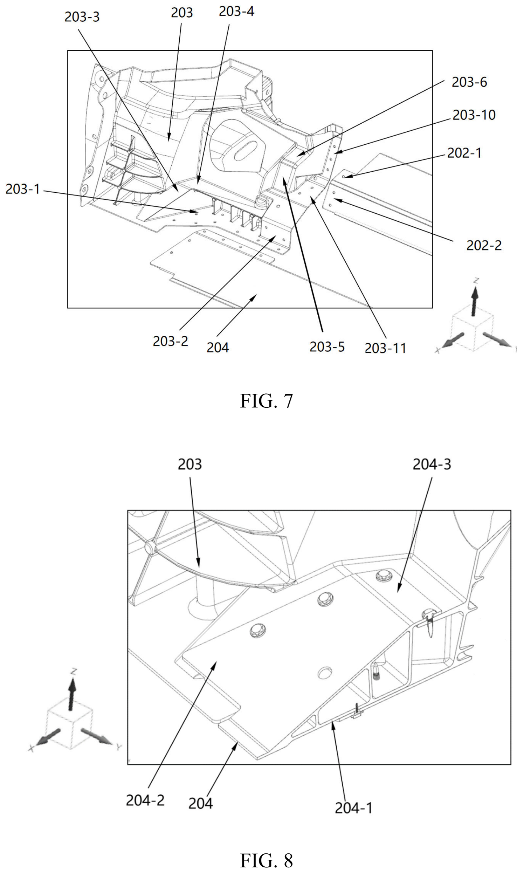

For example, as shown in FIG. 6 and FIG. 7, the integrated member 203 is connected to the first lateral beam 202 and the second lateral beam 204 separately in a form of double-"Z"-like-shaped nesting. As shown in FIG. 8, the integrated member 203 and the second lateral beam 204 perform section cooperation in a form of a "Z"-like-shaped nesting structure.

As shown in FIG. 4 to FIG. 7, the following describes in detail a connection relationship between the integrated member 203 and the first lateral beam 202 with reference to a specific embodiment.

The integrated member 203 has an integrated member first profile 203-5, an integrated member second profile 203-6, an integrated member third profile 203-10, and an integrated member fourth profile 203-11. The integrated member first profile 203-5 abuts against the integrated member second profile 203-6 in the third direction, and the integrated member first profile 203-5 is located below the integrated member second profile 203-6.

The integrated member third profile 203-10 abuts against the integrated member fourth profile 203-11 in the third direction, and the integrated member third profile 203-10 is located above the integrated member fourth profile 203-11.

An included angle with an opening facing a position at which the integrated member third profile 203-10 abuts against the integrated member fourth profile 203-11 is formed between the integrated member first profile 203-5 and the integrated member second profile 203-6. An included angle with an opening facing a position at which the integrated member first profile 203-5 abuts against the integrated member second profile 203-6 is formed between the integrated member third profile 203-10 and the integrated member fourth profile 203-11.

In addition, the integrated member third profile 203-10 and the integrated member fourth profile 203-11 are located on one side of the integrated member first profile 203-5 and the integrated member second profile 203-6 in the first direction respectively.

Correspondingly, the first lateral beam 202 has a first lateral beam first profile 202-1 and a first lateral beam second profile 202-2. As shown in FIG. 7 and FIG. 8, the integrated member first profile 203-5 may be in a lap joint with the first lateral beam second profile 202-2, and may be fastened through two physical connection structures, and the integrated member second profile 203-6 may be in a lap joint with the first lateral beam first profile 202-1, and may be fastened through one or two physical connection structures, to form an upper "Z-shaped" connection structure.

The integrated member third profile 203-10 is in a lap joint with a corresponding lower profile of the first lateral beam 202, and may be fastened through three physical connection structures, and the integrated member fourth profile 203-11 is in a lap joint with a corresponding lower profile of the first lateral beam 202, and may be fastened through two physical connection structures, to form a "Z-shaped" connection structure between the integrated member 203 and the lower layer of the first lateral beam 202.

In this embodiment, the first lateral beam 202 and the integrated member 203 are connected in a double-Z-like-shaped nesting connection form, so that connection reliability between the integrated member 203 and the first lateral beam 202 can be effectively improved. In this way, structural stability of the upper part of the integrated member 203 can be effectively stabilized when a collision force is transferred to the integrated member 203, and collision force transfer of the longitudinal beam 141 is effectively dispersed. In addition, the integrated member 203 and the first lateral beam 202 are connected in a double Z-like-shaped nesting connection form, to facilitate fastening the integrated member 203 to the first lateral beam 202 in a plurality of dimensions in three-dimensional space instead of connection on a single plane. In this way, reliability of the connection between the first lateral beam 202 and the root of the longitudinal beam 141 can be greatly improved. Similarly, the integrated member 203 and the second lateral beam 204 are also connected in a double Z-like-shaped nesting connection form, to ensure stability of collision force transfer at the root of the longitudinal beam 141 and protection for occupants. As shown in FIG. 8, that the integrated member 203 and the second lateral beam 204 perform section cooperation in a form of a "Z"-shaped nesting structure is displayed.

The integrated member 203 is disposed between the dashboard 201 and the front longitudinal beam, the integrated member 203 is connected to the front longitudinal beam in the front direction, and is connected to the dashboard 201 and the A-pillar 251 in the rear direction, and the integrated member 203 is connected to the lateral beam in the left-right direction. The first lateral beam 202 is connected to the second lateral beam 204, and the second lateral beam 204 may be connected to the lower end of the dashboard 201, to greatly improve a collision force transfer effect of the lower end of the dashboard 201 and the root of the front longitudinal beam and protection performance.

In some implementations of this application, the vehicle further includes a central passage 213, and the central passage 213 is separately connected to the first lateral beam 202 and the second lateral beam 204, where a section of at least one of the first lateral beam 202 and the second lateral beam 204 has a plurality of chambers. For example, the first lateral beam 202 and the second lateral beam 204 separately extend in the second direction and are separately connected to the central passage 213. When the first-direction force transfer frame cooperates with the second-direction force transfer frame, and when the second lateral beam 204 is connected to the lower end of the dashboard 201 in the third direction, a collision force is dispersedly transferred to the first lateral beam 202, the second lateral beam 204, the A-pillar 251, the door sill 241, and the central passage 213 through a stable force transfer framework structure of a lower part of the dashboard 201, to improve the collision force transfer stability effect at the lower end of the dashboard 201 and protection performance for occupants.

As shown in FIG. 14, the first lateral beam 202 adopts a dual-cavity section design solution, to improve a force transfer effect from the lateral beam to the central passage 213. The section can dispersedly transfer a force and preform cavity deformation, so that a collision force from the longitudinal beam 141 may be partially transferred to the central passage 213, and bending and deformation of the cavity of the first lateral beam 202 can be preformed, to reduce the collision intrusion amount of occupants.

For example, the first lateral beam 202 has the first lateral beam first profile 202-1, the first lateral beam second profile 202-2, and a first lateral beam third profile 202-3, the central passage 213 has a central passage first profile 213-2 and a central passage second profile 213-1, and the first lateral beam third profile 202-3 may be a rib structural profile.

The first lateral beam 202 is set to be of a double-cavity section structure, and the first lateral beam first profile 202-1 is connected to the central passage first profile 213-2, and the first lateral beam second profile 202-2 is connected to the central passage second profile 213-1. A position of the first lateral beam third profile 202-3 in the middle of the double-cavity section of the first lateral beam 202 is set at the top of the central passage first profile 213-2. When a front collision occurs, in the double-cavity section design of the first lateral beam 202, forces can be dispersedly transferred, so that the first lateral beam third profile 202-3 in the middle reaches a purpose of preforming cavity deformation. In this way, a collision force from the longitudinal beam 141 can be partially transferred to the central passage 213 through the first lateral beam 202. In addition, a rib structure faces the central passage 213, so that stability and force transfer effect of the central passage 213 during collision force transfer can be effectively improved.

The central passage 213 has a central passage third profile 213-3, and the second lateral beam 204 adopts a " 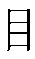 "-like-shaped triangular section design and is connected to the central passage third profile 213-3, to prevent the central passage 213 from being unstable and bent when resisting a front collision force, improve force transfer stability of the central passage 213 and protection for occupants, and reduce the front collision intrusion amount of an occupant cabin. In other words, the second lateral beam 204 adopts the " 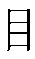 "-like-shaped triangular section design, to prevent the central passage 213 from bending, so that force transfer stability of the central passage 213 and protection for occupants are improved.

A part of the integrated member 203 may be used as a longitudinal beam connecting plate. The longitudinal beam connecting plate may be an inner and outer longitudinal beam connecting plate, and may be used to connect to a peripheral part. In other words, the integrated member 203 further integrates the longitudinal beam connecting plate structure, and the longitudinal beam 141 may transfer a collision force to more structures through the integrated member 203.

A part of the integrated member 203 may be used as a dust cover. In other words, the part of the integrated member 203 may have a dustproof function.

The integrated member 203 may integrate force transfer structural components such as a rear section of the front longitudinal beam, the inner and outer connecting plate of the longitudinal beam, the dust cover, and an inner and outer reinforcing plate in a conventional structure. For example, parts such as the rear section of the longitudinal beam, an inner and outer longitudinal beam rear connecting plate, and the dust cover of an originally conventional design at the root of the longitudinal beam are integrated into an aluminum casting structural part.

The integrated member 203 has an integrated member fifth profile 203-3 and an integrated member sixth profile 203-4, and the second lateral beam 204 has a second lateral beam first profile 204-2 and a second lateral beam second profile 204-3.

The integrated member fifth profile 203-3 is in a lap joint with the second lateral beam first profile 204-2, and may be fastened through two physical connection structures.

The integrated member sixth profile 203-4 is in a lap joint with the second lateral beam second profile 204-3, and may be fastened through four physical connection structures, to form an upper "Z-shaped" connection structure between the integrated member 203 and the second lateral beam 204.

The integrated member 203 has an integrated member seventh profile 203-1 and an integrated member eighth profile 203-2, and the second lateral beam 204 has a second lateral beam third profile 204-1.

The integrated member seventh profile 203-1 is in a lap joint with the second lateral beam third profile 204-1, and may be fastened through seven physical connection structures, and the integrated member eighth profile 203-2 and a corresponding profile of the second lateral beam 204 are fastened through two physical connection structures, to finally form a lower "Z-shaped" connection structure between the integrated member 203 and the second lateral beam 204. A "double Z-shaped" nesting connection form is used, so that connection reliability between the integrated member 203 and the second lateral beam 204 is effectively improved. In this way, structural stability of the lower part of the integrated member 203 is effectively stabilized when a collision force is transferred to the integrated member 203, and collision force transfer of the longitudinal beam 141 is effectively dispersed.

According to an embodiment of this application, the vehicle includes at least two integrated members 203, where one of the integrated members 203 is provided with a through hole for a steering column to pass through. In other words, there are at least two integrated members 203. When there are two integrated members 203, one integrated member 203 may be installed at one end part of the longitudinal beam 141 in the first direction, and the other integrated member 203 may be installed at the other end part of the longitudinal beam 141 in the first direction. For ease of description, one end part of the longitudinal beam 141 is used for description in embodiments of this application.

For example, the front longitudinal beam of this application includes the front section of the front longitudinal beam and the rear section of the front longitudinal beam, and one integrated member 203 is installed at an end part of the rear section of the front longitudinal beam. In this case, the rear section of the front longitudinal beam may integrate a rear section of a longitudinal beam and a force transfer structural component of the rear section of the front longitudinal beam in a conventional structure, to form the highly integrated rear section of the front longitudinal beam.

In summary, in the vehicle according to this embodiment of this application, the integrated member 203 integrating a plurality of force transfer structures is used, so that a collision force received by the longitudinal beam can be dispersedly transferred to a plurality of structures, to improve a collision force transfer stability effect and occupant protection performance. The vehicle may be a new energy sports car or the like.

In this application, that a first feature is "above" or "below" a second feature may be that the first feature and the second feature are in direct contact with each other, or the first feature and the second feature are in indirect contact through an intermediate medium, unless otherwise expressly specified and limited. That the first feature is "above", "over", or "on" the second feature may be that the first feature is right above or obliquely above the second feature, or merely mean that a horizontal height of the first feature is greater than that of the second feature. That the first feature is "below", "under", or "underneath" the second feature may be that the first feature is right below or obliquely below the second feature, or merely mean that the horizontal height of the first feature is less than that of the second feature.

In description of this specification, reference term such as "one embodiment", "some embodiments", "example", "specific example", or "some examples" means that a specific feature, structure, material or characteristic described with reference to the embodiment or example is included in at least one embodiment or example of this application. In this specification, schematic representations of the foregoing terms do not necessarily refer to a same embodiment or example. The described specific feature, structure, material, or characteristic may be combined in a proper manner in any one or more of embodiments or examples. In addition, a person skilled in the art may combine different embodiments or examples described in this specification and features of different embodiments or examples in a case of no conflict.

Although embodiments of this application are already shown and described in the foregoing, it will be understood that the foregoing embodiments are exemplary and should not be construed as a limitation on this application. A person of ordinary skill in the art may make changes, modifications, substitutions, and alternations to the foregoing embodiments within the scope of this application.

## Claims

1. A vehicle, comprising:
a longitudinal beam and an A-pillar;
a lateral beam; and
an integrated member, wherein the integrated member is installed on the longitudinal beam, and the integrated member is separately connected to the lateral beam and the A-pillar.

2. The vehicle according to claim 1, wherein the integrated member is an integrally formed member.

3. The vehicle according to claim 2, wherein the integrated member is a casting.

4. The vehicle according to any one of claims 1 to 3, further comprising:
a dashboard, wherein the dashboard is connected to the integrated member.

5. The vehicle according to any one of claims 1 to 4, further comprising:
a door sill, wherein the door sill is connected to the integrated member.

6. The vehicle according to any one of claims 1 to 5, further comprising:
a floor, wherein a height of the floor is not higher than a height of the longitudinal beam.

7. The vehicle according to any one of claims 1 to 6, wherein the integrated member is connected to the longitudinal beam in a nested manner.

8. The vehicle according to claim 7, wherein a section of the longitudinal beam has a plurality of cavities.

9. The vehicle according to any one of claims 1 to 8, wherein the integrated member is connected to the lateral beam in a nested manner.

10. The vehicle according to claim 9, wherein the integrated member has a first cooperating surface and a second cooperating surface that are separately formed in a Z shape, the lateral beam has a third cooperating surface and a fourth cooperating surface that are separately formed in a zigzag shape, the first cooperating surface is in contact with the third cooperating surface, and the second cooperating surface is in contact with the fourth cooperating surface.

11. The vehicle according to claim 10, wherein at least one of the first cooperating surface and the second cooperating surface of the integrated member extends toward the lateral beam, and at least one of the third cooperating surface and the fourth cooperating surface of the lateral beam extends toward the integrated member.

12. The vehicle according to any one of claims 1 to 11, wherein the integrated member has a first flanged surface and a second flanged surface, the first flanged surface and the second flanged surface cooperate to form an opening having an included angle, a part the A-pillar extends into the opening, the A-pillar has an A-pillar first profile and an A-pillar second profile, and when the part of the A-pillar is embedded into the integrated member, the A-pillar first profile is opposite to the first flanged surface, and the A-pillar second profile is opposite to the second flanged surface.

13. The vehicle according to any one of claims 1 to 12, wherein the lateral beam comprises a first lateral beam and a second lateral beam, and the first lateral beam and the second lateral beam are spaced apart; and the integrated member is separately connected to the first lateral beam, the second lateral beam, and the A-pillar.

14. The vehicle according to claim 13, further comprising:
a central passage, wherein the central passage is separately connected to the first lateral beam and the second lateral beam; and
a section of at least one of the first lateral beam and the second lateral beam has a plurality of chambers.

15. The vehicle according to any one of claims 1 to 14, comprising at least two integrated members, wherein one of the integrated members is provided with a through hole for a steering column to pass through.
